# EUROPEAN PATENT APPLICATION

(11) **EP 4 711 100 A1**
(43) Date of publication of application: **18.03.2026**
(21) Application number: 24382974.4
(22) Date of filing: 12.09.2024
(51) Int. Cl.: B25J 15/00, B25J 15/10, B32B 38/10

(54) **GRIPPER AND PROCEDURE FOR THE SEPARATION OF LAYERS**

(71) Applicant: Consejo Superior de Investigaciones Científicas (CSIC), 28006 Madrid (ES)
(72) Inventor: Foix Salmerón, Sergio, 08028 Barcelona (ES); Oriol Lladò, Jaume, 08028 Barcelona (ES); Borràs Sol, Júlia, 08028 Barcelona (ES); Grosch Obregon, Patrick, 08028 Barcelona (ES)
(74) Representative: Pons IP

(57) **Abstract**

The invention refers to a gripper for the separation of layers of a deformable material, the layers being stacked on a surface, comprising a foot (10) configured to be fastened to a robot, two arms for the grabbing of the layers and a motor (20) for the movement of the arms, wherein a first arm comprises a shaft (3) where a plurality of rolls (1, 2) is located, and a second arm comprises at least one finger (4) which further comprises a tip (6) with a longitudinal configuration, a housing (5), where one end of the tip (6) is fixed, and a spring (14), located within the housing (5) that provides longitudinal movement to the tip (6), wherein, one of the rolls (1, 2) comprises protuberances (13) on the surface to provide a friction surface, and the second arm is configured to move towards the first arm.

## Description

### OBJECT OF THE INVENTION

The present invention relates to a robotic gripper for the separation and grip of thin layers that are made of deformable material, the layers being stacked on a surface such as a table.

The invention also refers to the procedure performed by the gripper.

### BACKGROUND OF THE INVENTION

Grippers to separate layers of deformable material are already known in the art. They are used for the manipulation of flat products like clothes or plastic sheets, stacked on a table.

Document CN116690630A provides an end effector for clamping a cloth-like object and a clamping device. According to the end effector for clamping the cloth-like object, one end of a first clamping assembly is rotationally connected with a modular base, and a rolling anti-skid fingertip is installed at the other end of the first clamping assembly and can rotate around the axis of the rolling anti-skid fingertip; the second clamping assembly and the first clamping assembly are oppositely arranged, one end of the second clamping assembly is rotationally connected with the modular base, and an anti-skid fingertip is installed at the other end of the second clamping assembly and can rotate. The driving mechanism is installed on the modular base, an anti-skid part is arranged at the bottom end of the driving mechanism, and the driving mechanism is in transmission connection with the first clamping assembly and the second clamping assembly at the same time so as to drive the anti-skid fingertips, the rolling anti-skid fingertips and the anti-skid part to move in the direction away from or close to each other.

However, this device is focused on arising clothes stacked on a table to be grabbed and moved away from the stack, with no reference to the separation of layers.

Document US20240139963A1 discloses an apparatus for separating a film layer from a ply of composite prepreg. The apparatus comprises an end effector, a clamping mechanism and a flicking mechanism. The clamping mechanism is mounted on the end effector is configured to clamp the ply. The flicking mechanism is configured to separate the film layer from the ply by flicking an edge of the ply.

However, this apparatus is just focused on separating layers from the edges. There is no mention to separate layers that are stacked on a surface, but there is no reference to the opening of a bag.

### DESCRIPTION OF THE INVENTION

The present invention relates to a robotic gripper for the separation and grip of thin layers that are made of deformable material, the layers being stacked on a surface such as a table.

The gripper comprises a foot configured to be fastened to a robot, two arms for the grabbing of the layers and an electric motor for the movement of the arms.

A first arm comprises a shaft where a plurality of rolls s located.

The shaft is connected to the electric motor through a conveyor belt so that the rolls may rotate.

A second arm comprises at least one finger which further comprises a tip with a longitudinal configuration, a housing, where one end of the tip is fixed, and a spring, located within the housing that provides longitudinal movement to the tip.

With this configuration, the tip may move inside out of the housing and perform an independent damping along the longitudinal axis. The spring also serves to return the tip to its outer resting position. The end of the tip is preferably covered with a medium level friction material.

The movement of the finger is performed by the electric motor.

One of the rolls comprises protuberances on the surface. The protuberances are made up of rubber or a similar material and provide the main roll with a high friction texture surface to ensure a good dragging in contact with the layers to be manipulated.

The second arm is configured to move towards the first arm.

In one embodiment, the second arm comprises two fingers and the protuberances are located on a main roll that is located between two side rolls, the main roll having a bigger diameter than the side rolls. Additionally, the side rolls are aligned with the tips of the fingers in a direction perpendicular to the shaft.

The surface of the side rolls does not need to have a particular texture, as they are not focused on dragging the material, as in the case of the main roll. The side rolls have the functionality to keep a straight direction of the material that is being dragged. Additionally, the side rolls are located facing the tips of the fingers, so that they provide support for properly grasping the layers when the fingers approach for gripping the layers to finally be moved away.

The foot may be connected to a base that comprises at least one track where the fingers are fixed with capacity to slide.

So, besides the longitudinal movement of the tip, the finger may also move along the track to find a resting position and to finish the dragging movement of the material to be manipulated, as will be described.

The fingers have two functionalities which are performed with these two movements.

A first functionality is to contact the layer to be manipulated and apply pressure on it, so that it remains fixed to the surface where it is stacked. The spring is responsible of the pressure applied.

A second functionality of the finger is to approach to the rolls along the tracks to contact them so that the material may be gripped and moved away.

Additionally, the finger comprises all the mechanical elements to ensure a linear movement of the tips, to give structure and consistency to the finger and also to consider the assembly of the different elements to easily replace any of the components of the finger whenever needed.

The working of the gripper is now described.

A stack of layers remains on a surface with the robotic gripper of the invention resting above it.

When a layer is needed, the gripper is moved downwards until the tip of the fingers and the main roll contact the upper layer of the stack, making pressure on it.

The shaft is then activated so that the main roll moves on the layer, dragging it and separating it from the second layer remaining. The layer is then located between the rolls and the fingers.

The fingers are then moved to contact the side rolls, holding the layer.

This movement may be performed along the tracks.

The gripper is then moved away holding the layer between the fingers and the side rolls.

The gripper may take layers from a stack or may as well take bags made up of layers that are joined by the sides. In this latter case, the gripper will separate the first layer from the second, opening the bag.

The gripper may be assembled in any linear actuator or robotic arm with a force sensor that allows to move the gripper longitudinally in order to provide a pressure on the material to be manipulated and also to move the gripper to a second position where the layers will be left once the fingers separate from the side rolls.

The movement of the different elements of the gripper, so as the electric connections and electronic involved, is not described as it belongs to the state of the art. A skilled person will understand the elements needed and their connections therein in order to perform the movements needed.

### DESCRIPTION OF THE DRAWINGS

For a better understanding of the present invention, the figures listed below are included in this specification.
Figure 1 represents a perspective front view of the gripper of the invention.
Figure 2 represents a perspective rear view of the gripper of the invention.
Figure 3 represents a side view of the upper part of the gripper.
Figure 4 represents an exploded perspective view of the fingers.

The following is a list of the references used in the figures to facilitate their follow-up:
1. Main roll.
2. Side rolls.
3. Shaft.
4. Fingers.
5. Housings.
6. Tips.
7. Tracks.
8. Conveyor belt.
9. Base.
10. Foot.
11. Walls.
12. Support.
13. Protuberances.
14. Spring.
15. Rods.
16. Cover.
17. Protector.
20. Motor.

### PREFERRED EMBODIMENT OF THE INVENTION

The gripper of the invention will be now described in view of the figures according to a preferred embodiment.

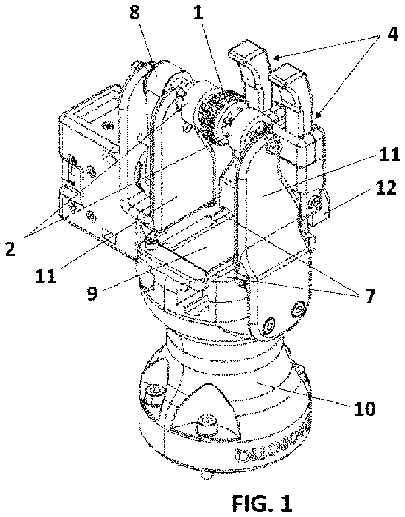

Figure 1 represents a perspective view of the gripper of the invention. The gripper comprises a foot (10) with holes for the location of bolts so that it may be fastened to any kind of robot, like a robotic arm, which will be in charge of the movement of the gripper.

The foot (10) extends to a base (9) where two arms are located for the gripping of layers.

A first arm comprises supporting walls (11) with holes to locate a shaft (3) that is fixed with nuts with the capacity to rotate. The shaft (3) extends beyond one of the supporting walls (11) to locate a conveyor belt (8) that is also connected to the axis of an electric motor (20) in charge of rotating the shaft (3) when it is activated.

A main roll (1) and two side rolls (2) are located in the shat (3), one side roll (2) at each side of the main roll (1).

The base (9) also comprises a couple of tracks (7) that are configured perpendicularly to the shaft (3) and aligned with the side rolls (2).

A second arm is also located on the base (9). The second arm comprises a couple of fingers (4) that may slide along the tracks (7) as will be described.

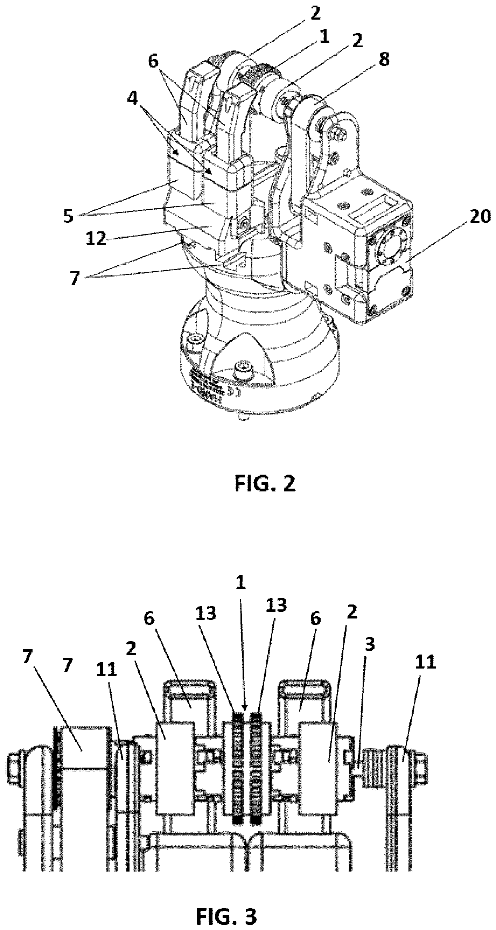

As been seen in figure 2, each of the fingers (4) comprises a tip (6), with a longitudinal configuration, having one end hidden in a housing (5). The hidden end of the tips (6) is connected to the housing (5) through a spring (14) which provides the tips (6) with movement along their longitudinal axis and serves to locate the tips (6) in their outer position.

The free end of the tips (6) is in charge to contact the layers to be manipulated and prevent them from moving along once the gripper is activated and the rollers (1, 2) start to rotate. So, they are coated with a material that provides friction, like hot melting glue. The pressure of the tips (6) when contacting the objects is provided by the spring (14).

The housings (5) are fixed to a support (12) that comprises two rails that are fixed to the tracks (7) of the base (9) so that the fingers (4) may approach and contact the side rolls (2). This movement is performed by the electric motor (20).

Figure 3 represents the elements in charge of grabbing the objects to be manipulated.

In this regard, the shaft (3) may clearly be seen with the rolls (1, 2) located between the supporting walls (11). It may be seen that all the rolls (1, 2) have the same dimension. However, the main roll (1) comprises protuberances (13) that provide the main roll (1) with a friction surface, making the main roll (1) bigger than the side rolls (2).

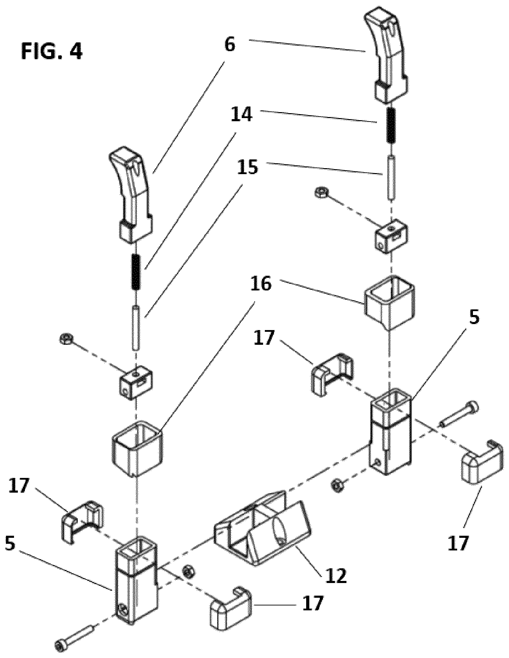

Figure 4 shows the elements comprising the fingers (4).

The tips (6) are the most outer elements.

The springs (14) are in contact with them to make a direct force on them.

There are also rods (15) with threaded ends located within the springs (14) which, apart from ensuring a linear movement of the springs (14) and the tips (6), also serve to give structure and consistency to the tips (6).

The end of the housing (5) is provided with a cover (16), which serves to protect and reinforce the housings (5) in the horizontal direction, and two protectors (17) with the functionality of preventing the tips (6) from leaving the housing (5). To do this, the protectors (17) comprise a closing end and the tips (6) comprise a thickness reduction in the longitudinal axis so that an assembly may be performed. These two protectors (17), instead of being glued or fixed with screws t the housing (5), are fitted using guides to facilitate the assembly and exchange of the tips (6).

Next, the description of the way the gripper works will be described.

Initially, the robotic arm comprising the gripper is located above a stack of paper bags. This bags usually are medical bags, comprising a plastic layer and a paper layer. This situation is also controlled by the gripper of the invention, due to the high friction material of the end of the tips (6).

Once the motor (20) is activated, the gripper moves downwards so that both the tips (6) of the fingers (4) and the main roll (1) contact the upper layer of the upper bag of the stack. The springs (14) provide the grabbing force of the fingers (4) on the bag. A standard force may be around 5N and 20N.

Then, the motor (20) is activated to start rotation of the shaft (3), so that the main roll (1) starts dragging the upper layer towards the fingers, separating it from the lower layer of the bag and lifting it. The layer remains then located between the fingers (4) and the rolls (1, 2).

Then, the motor (20) activates the second arm so that the support (12) moves along the tracks (7). The fingers (4) approach to the side rolls (2) until contact is performed with the layer of the bag held in between. The motor (20) is then stopped, and the robot moves the gripper with the bag, already open, to leave it in a position away from the stack or to be held by a user, when the motor (20) is again activated to move the fingers back along the tracks (7) and release the bag.

The robotic arm is then moved back to the initial position ready to manipulate the next bag.

The movements of the components of the gripper do not need to be explained, as common mechanical and electronic knowledge is used.

## Claims

1. Gripper for the separation of layers of a deformable material, the layers being stacked on a surface, comprising a foot (10) configured to be fastened to a robot, two arms for the grabbing of the layers and a motor (20) for the movement of the arms, **characterized in that:**
- a first arm comprises a shaft (3) where a plurality of rolls (1, 2) is located, and
- a second arm comprises at least one finger (4) which further comprises:
- a tip (6) with a longitudinal configuration,
- a housing (5), where one end of the tip (6) is fixed, and
- a spring (14), located within the housing (5) that provides longitudinal movement to the tip (6),
wherein,
- one of the rolls (1, 2) comprises protuberances (13) on the surface to provide a friction surface, and
- the second arm is configured to move towards the first arm.

2. The gripper of claim1, wherein the second arm comprises two fingers (4) and the protuberances are located on a main roll (1) that is located between two side rolls (2), wherein,
- the main roll (1) has a bigger diameter than the side rolls (2), and
- the side rolls (2) are aligned with the tips (6) of the fingers (4) in a direction perpendicular to the shaft (3).

3. The gripper of claims 1 or 2, wherein the foot (10) is connected to a base (9) that comprises at least one track (7) where the fingers (4) are fixed with capacity to slide.

4. Procedure to separate layers that are stacked on a surface with the gripper of the above-mentioned claims, wherein the gripper is located above the stack of layers, **characterized in that** it comprises the following steps:
a) moving the gripper until the tip (6) and the main roll (1) make pressure on one layer,
b) activate the motor (20) to rotate the shaft (3) and move the main roll (1) on the layer,
c) move the fingers (4) until the tips (6) contact the side rolls (2) to hold the layer.

5. The procedure of claim 4, wherein the fingers (4) move along the tracks (7).
